# EUROPEAN PATENT SPECIFICATION

(11) **EP 2 890 559 B1**
(45) Date of publication and mention of the grant of the patent: **01.03.2017**
(21) Application number: 13760186.0
(22) Date of filing: 28.08.2013
(51) Int. Cl.: B32B 15/08, B32B 15/085, B32B 15/09, B32B 15/20, B32B 27/10, B32B 27/32, B32B 27/34, B32B 27/36

(54) **MODIFIED ETHYLENE-BASED FILMS TO PROMOTE ISOCYANATE CHEMICAL REACTIONS IN POLYURETHANE LAMINATING ADHESIVES**
MODIFIZIERTE FILME AUF BASIS VON ETHYLEN ZUR FÖRDERUNG VON ISOCYANAT-CHEMISCHEN REAKTIONEN IN POLYURETHANKASCHIERKLEBSTOFFEN
FILMS À BASE D'ÉTHYLÈNE MODIFIÉS POUR PROMOUVOIR DES RÉACTIONS CHIMIQUES D'ISOCYANATE AU SEIN D'ADHÉSIFS POLYURÉTHANNE POUR STRATIFIÉS

(30) Priority: 31.08.2012 US 201261695679 P; 31.08.2012 US 201261695654 P
(43) Date of publication of application: 08.07.2015
(73) Proprietor: Dow Global Technologies LLC, Midland, MI 48674 (US); Rohm and Haas Company, Philadelphia, PA 19106 (US)
(72) Inventor: CHEN, Xuming, Pearland, TX 77584 (US); MCGEE, Robert, L., Midland, MI 48642 (US); VIETTI, David, E., Cary, IL 60013 (US); MIYAKE, Kevin, Tower Lakes, IL 60010 (US); BRINKMAN, Larry, F., Woodstock, IL 60098 (US)
(74) Representative: Boult Wade Tennant
(86) International application number: PCT/US2013/057016
(87) International publication number: WO 2014/036099

(56) References cited:
- WO-A1-97/03821
- WO-A1-2013/043635
- JP-A- 2010 150 344
- JP-A- 2011 016 232
- US-A1- 2010 010 156

## Description

### BACKGROUND OF THE INVENTION

Laminates are useful in food packaging. For example, see International Publications WO 2013/043635 and WO2013/043652. JP 2010-150344 relates to a resin composition for lamination and a laminated film. For laminates that comprise a polyurethane (PU) adhesive, the adhesive must be near completely or completely cured before the laminated can be used. This is particularly important if the isocyanate is an aromatic isocyanate because any unreacted isocyanates can react with moisture to form primary aromatic amines (PAA), which can compromise the food, if such comes in contact with the food. Two component polyurethane adhesives are typically formulated to provide an excess of isocyanate. Crosslinking through reaction of the isocyanate with ambient moisture is part of the curing process. This process may be slow, especially in a dry environment. If an excess of OH-terminated component is added, the adhesive will not have the required cohesive strength and the laminates may be defective. In addition, the mixed adhesive must not build viscosity too fast or it will be difficult to apply in formation of the laminate.

Once the adhesive has been applied, and the laminate is made, preferably the curing reaction proceeds as quickly as possible. However, the curing reaction must be slow enough to allow a sufficient working time or "pot life", but fast enough to complete the curing in a reasonable time. There is a need for film configurations that can accommodate both a reasonable pot life and a reasonably fast cure time, and these needs are met by the following invention.

### SUMMARY OF THE INVENTION

The invention provides A multilayer film comprising at least two layers A and B:
A. a film layer A formed from a composition A comprising at least the following: an ethylene-based polymer and
   a cure catalyst comprising at least one hydroxy group and at least one organic metal salt; and
B. a film layer B formed from a composition B comprising at least one isocyanate; and wherein film layer A is in contact with film layer B;
wherein the ethylene-based polymer is a linear low density polyethylene.

In one embodiment the invention is an article comprising a multilayer film as described above.

### BRIEF DESCRIPTION OF THE DRAWINGS

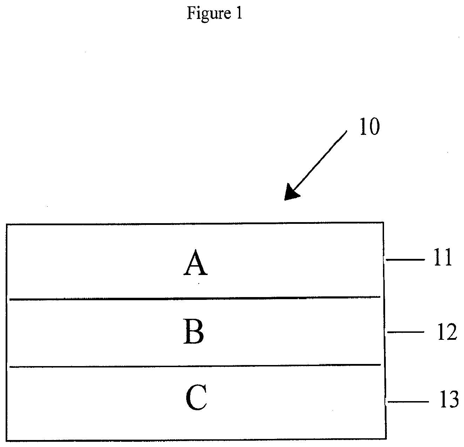

Figure 1 is a schematic of a three-layer film structure.

### DETAILED DESCRIPTION OF THE INVENTION

### Overview

It has been discovered that the time necessary to effect a full cure of a PU adhesive used to join an ethylene-based polymer layer to another layer (e.g., another plastic film or metal foil or a non-film or foil substrate) can be reduced, if catalysts and a compound with active hydrogen groups (hydrogen connected to either oxygen, nitrogen or sulfur is an active hydrogen group) are incorporated into the ethylene-based polymer layer to promote isocyanate/isocyanate (NCO/NCO) reaction and isocyanate/hydroxyl (NCO/OH) reaction in the PU adhesive. These reactions increase the curing speed of the PU adhesive. The catalysts include a wide variety of Lewis acids and bases (for example, carboxylate salts, tertiary amines, zinc- and/or tin-containing compounds, etc.). Typical compounds with active hydrogens include polyols and alkoxylated amines and amides. The presence of these compounds in the ethylene based polymer not only provides reactive sites to crosslink the polyurethane adhesive, but also enhances the interaction of the catalyst and adhesive.

Two-part or two-component polyurethane (PU) adhesives are often used to laminate a polyolefin layer to a substrate layer, e.g., metal foil, another plastic film, paper, etc., for use in various applications, e.g., in food packaging. Typical two-part PU adhesives contain an NCO-terminated component and an OH-terminated component. The NCO-terminated component is typically added in excess of the OH-terminated component to ensure complete curing, typically by contact with moisture under ambient conditions (e.g., 23°C and atmospheric pressure).

In contrast, a one-part or one-component PU adhesive can also be used in the practice of this invention. One-part PU adhesives are NCO terminated prepolymers which cure solely through crosslinking with ambient moisture. One part PU adhesives may also contain silane functional groups which also crosslink with moisture.

Catalysts may be placed in the films to promote both NCO/NCO, NCO/OH and NCO/water reactions. Some catalysts may be effective alone while others can be used in combination with one another. The catalyst and compound with active hydrogens can be used to promote the cure of both one and two component PU adhesives.

### Embodiments

As discussed above, the invention provides a multilayer film comprising at least two layers A and B:
A. a film layer A formed from a composition A comprising at least the following: an ethylene-based polymer and
   a cure catalyst comprising at least one hydroxy group and at least one organic metal salt; and
B. a film layer B formed from a composition B comprising at least one isocyanate; and wherein film layer A is in contact with film layer B;
wherein the ethylene-based polymer is a linear low density polyethylene.

In one embodiment the invention is a multilayer film according to any one or more embodiments described herein, and wherein the film consisting essentially of Layer A and Layer B.

The film layer A is formed from a composition A comprising at least the following: an ethylene-based polymer and
a cure catalyst comprising at least one hydroxy group and at least one organic metal salt.

In one embodiment, the hydroxy-containing compound has a number average molecular weight (Mn) from 60 to 5,000 g/mol, further from 90 to 4,000 g/mole, or a molecular weight from 50 to 1000 g/mole, further from 90 to 800 g/mole.

In one embodiment, the hydroxy-containing compound has a number average molecular weight (Mn) from 60 to 5,000 g/mol, further from 90 to 4,000 g/mole.

In one embodiment, the hydroxy-containing compound has a molecular weight from 50 to 1000 g/mole, further from 90 to 800 g/mole; and (iii) a cure catalyst.

The Film Layer A is formed from composition A which comprises an ethylene-based polymer, and a cure catalyst comprising at least one hydroxy group and at least one organic metal salt.

In one embodiment, the Film Layer A is formed from composition A which comprises an ethylene-based polymer and the cure catalyst comprising at least one hydroxy group and at least one organic metal salt.

In one embodiment, composition A comprising the ethylene-based polymer, and a cure catalyst comprising at least one hydroxy group and at least one organic metal salt.

Composition B comprises at least one isocyanate.

In one embodiment the multilayer film further comprises one or more additional layers formed from a composition other than composition A, e.g., composition A without one or both of a compound with active hydrogens and a cure catalyst for the PU adhesive.

The ethylene-based polymer of composition A is LLDPE.

In one embodiment the ethylene-based polymer of composition A has a density from 0.87 to 0.96 g/cc, or from 0.89 to 0.95 g/cc, or from 0.90 to 0.94 g/cc, or from 0.90 to 0.93 g/cc; and a melt index (I₂) from 0.1 to 10, or from 0.2 to 5, or from 0.5 to 2 g/10 min.

In one embodiment the cure catalyst of composition A comprises a Lewis base, a metal oxide or hydroxide or an alkali metal salt of a carboxylic acid.

In one embodiment the cure catalyst of composition A comprises a Lewis acid such as various compounds of metals, such as Bi, Pb, Sn, Ti, Fe, Sb, U, Cd, Co, Th, Al, Hg, Zn, Ni, V, Ce, etc., plus pyrones, lactams and acids. In a preferred embodiment the cure catalyst is a tin-based compound and in a more preferred embodiment the cure catalyst is butylstannoic acid and/or butyltin tris-2-ethylhexoate. In another preferred embodiment the cure catalyst is zinc ricinoleate.

In one embodiment the cure catalyst of compostion A has a molecular weight in the range of 40 to 1200 grams/mole.

In one embodiment the cure catalyst of compostion A has a molecular weight in the range of 40 to 800 grams/mole.

In one embodiment the amount of cure catalyst in composition A is from 10 parts per million (ppm) to 10,000 ppm, preferably from 500 to 5,000 ppm, based on the weight of composition A.

In one embodiment the cure catalyst may comprise two or more embodiments as described herein.

In one embodiment the multilayer film comprises at least three layers.

In one embodiment the multilayer film comprises at least five layers.

In one embodiment the multilayer film comprises a layer C formed from composition C. In one embodiment composition C comprises polyethylene terephthalate and/or a metal foil.

In one embodiment the isocyanate of composition B is at least one of an aromatic, aliphatic, and cycloaliphatic diisocyanates.

In one embodiment the isocyanate of composition B is a methylenebis(phenyl isocyanate) including the 4,4'-isomer, the 2,4'-isomer, and mixtures thereof, and
methylenebis(cyclohexyl isocyanate), inclusive of its various isomers.

In one embodiment the invention is an article comprising a multilayer film comprising at least two layers A and B:
A. a film layer A formed from a composition A comprising at least the following: an ethylene-based polymer and
   a cure catalyst comprising at least one hydroxy group and at least one organic metal salt; and
B. a film layer B formed from a composition B comprising at least one isocyanate; and wherein film layer A is in contact with film layer B;
wherein the ethylene-based polymer is a linear low density polyethylene.

In one embodiment film layer B is formed from a one component PU adhesive.

In one embodiment the articles of the previous embodiments are in the form of a food container.

In one embodiment the articles of the previous embodiments are pouches for the holding and/or storage of food.

The invention provides an article comprising the multilayer film of any of the previous embodiments. In a further embodiment, the article comprises a perishable material.

In one embodiment, the layer A is adjacent to the perishable material.

In one embodiment, the layer A is adjacent to another layer, which is adjacent to the perishable material.

In one embodiment, the perishable material is selected from food products or pharmaceutical products.

An inventive article may comprise a combination of two or more embodiments as described herein.

A multilayer film may comprise a combination of two or more embodiments as described herein. Composition A may comprise a combination of two or more embodiments as described herein. Composition B may comprise a combination of two or more embodiments as described herein. Layer A may comprise a combination of two or more embodiments as described herein. Layer B may comprise a combination of two or more embodiments as described herein.

### Ethylene-Based Polymers

Examples of suitable ethylene-based polymers include linear low density polyethylene (LLDPE).

In one embodiment, the ethylene-based polymer has a melt index ("I₂") from 0.01 g/10 min to 30 g/10 min, more typically from 0.1 g/10 min to 20 g/10 min, and even more typically from 0.1 g/10 min to 15 g/10 min.

An ethylene-based polymer may contain a combination of two or more embodiments as described herein.

### Cure Catalysts

A wide variety of catalysts are effective in promoting the reactions of isocyanates with active hydrogen compounds such as alcohols or water. Catalysts may be either Lewis bases, such as tertiary amines, or Lewis acids, such as ligand-complexed metals. Bases include triethylene diamine, tetramethyl guanidine, triethylamine, N-ethylmorpholine, 1,2,4-trimethyl piperazine, dimethylaminoethyl piperazine, metal oxides or hydroxides, and mild bases such as alkali metal carboxylates, etc. Acids include various compounds of metals such as Bi, Pb, Sn, Ti, Fe, Sb, U, Cd, Co, Th, Al, Hg, Zn, Ni, V, Ce, etc.) plus pyrones, lactams and organic or inorganic acids can be used as catalysts in the practice of this invention. Also sodium, lithium and potassium salts of carboxylic acids are effective. See J. Saunders; K. C. Frisch Polyurethanes: Chemistry and Technology, Part I, 129-217, Interscience, New York, 1962, and E. N. Doyle, The Development and Use of Polyurethane Products, Mc Graw-Hill, New York 1971, 64-70. Preferred catalysts include organic compounds such as the metal carboxylates in which the metal is Sn, Zn, K, Na or bases such as a tertiary amine. More preferred catalysts include tin compounds such as butylstannoic acid, butyltin tris-2-ethylhexoate, zinc ricinoleate and ATMER 163.

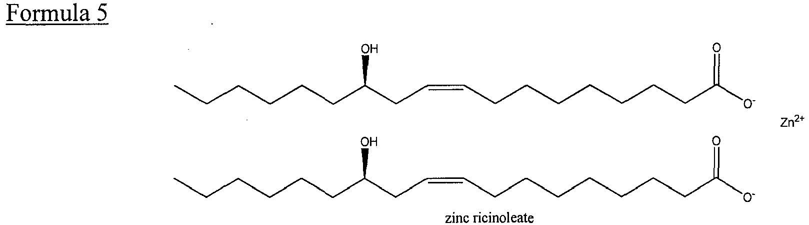

### Additives

In one embodiment composition A comprises at least one additive. Suitable additives include, but are not limited to, fillers, antioxidants, UV stabilizers, foaming agents, flame retardants, colorants or pigments, anti-blocking agents, slip-agents, and combinations thereof.

Antioxidants include, but are not limited to, hindered phenols; bisphenols; and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)-1,3,5-triazine; hexahydro-1,3,5-tris-β-(3,5-di-t-butyl-4-hydroxyphenyl)propionyl-s-triazine; 2,4,6-tris(n-1,4-dimethylpentyl-phenylene-diamino)-1,3,5-triazine; and tris-(3,5-di-t-butyl-4-hydroxybenzyl)isocyanurate.

### Polyurethane Adhesive

Composition B comprises at least one isocyanate.

In a further embodiment, Composition B comprises a polyurethane adhesive. The polyurethane (PU) component has no limitation in respect of its formulation. In one embodiment the PU component is thermoplastic, i.e., it becomes pliable or moldable above a specific temperature, and returns to a solid state upon cooling. These polyurethanes typically have a high molecular weight and their chains associate through intermolecular forces. In a preferred embodiment, the PU component is a thermoset, i.e., its chains are held together by irreversible chemical bonds that breakdown upon melting and do not re-form upon cooling. Thermoset polyurethanes are made in the same manner as thermoplastic polyurethanes except that the average functionality of the isocyanate and active hydrogen containing components is typically is excess of two.

The preferred polyurethane adhesive is a polymer prepared from a mixture comprising an organic diisocyanate and at least one polymeric polyol Diisocyanates suitable for use in preparing the polyurethanes according to this invention include aromatic, aliphatic, and cycloaliphatic diisocyanates and combinations of two or more of these compounds. Preferred diisocyanates include, but are not limited to, 4,4'-diisocyanatodiphenylmethane, p-phenylene diisocyanate, 1,3-bis(isocyanatomethyl)-cyclohexane, 1,4-diisocyanato-cyclohexane, hexamethylene diisocyanate, 1,5-naphthalene diisocyanate, 3,3'-dimethyl-4,4'-biphenyl diisocyanate, 4,4'-diisocyanato-dicyclohexylmethane, and 2,4-toluene diisocyanate. More preferred are 4,4'-diisocyanato-dicyclohexylmethane and 4,4'-diisocyanato-diphenylmethane. A preferred is 4,4'-diisocyanatodiphenylmethane.

The polymeric polyols which can be used include those conventionally employed in the art for the preparation polyurethanes. These polyols preferably have molecular weights (number average) falling in the range from 200 to 10,000 g/mole, preferably from 400 to 4,000 g/mole, and, more preferably from 500 to 3,000 g/mole. It is not unusual, and, in some cases, it can be advantageous, to employ more than one polyol. The polyols may have multiple hydroxyl groups per molecule. Preferably, the polyols will have an OH functionality of 2-3. Exemplary of the polyols are polyether diols, polyester diols, hydroxy-terminated polycarbonates, hydroxy-terminated polybutadienes, hydroxy-terminated polybutadiene-acrylonitrile copolymers, hydroxy-terminated copolymers of dialkyl siloxane and alkylene oxides, such as ethylene oxide, propylene oxide, and mixtures, in which any of the above polyols are employed as major component (greater than 50 percent w/w) with amine-terminated polyethers and amino-terminated polybutadiene-acrylonitrile copolymers. Additional examples of the polyols include the natural oil polyols such as castor oil.

Low molecular weight polyols may be used to a limited extent. Illustrative of such diols are ethylene glycol, 1,3-propanediol, 1,4-butanediol, 1,5-pentanediol, 1,6-hexanediol, neopentyl glycol; 1,4-cyclohexanedimethanol; hydroquinonebis-(hydroxyethyl)ether; cyclohexylenediols (1,4-, 1,3-, and 1,2-isomers), isopropylidenebis(cyclohexanols); diethylene glycol, dipropylene glycol, glycerol, trimethylolpropane, pentaerithyritol, ethanolamine, N-methyl-diethanolamine; and mixtures of any of the above

The polyurethane used in the practice of the illustrative embodiments is preferably prepared by reacting a polyol with an excess of isocyanate to make an NCO terminated prepolymer. Typical polyurethane prepolymers used in adhesives have a number average molecular weight (Mn) from 200 to 10,000 g/mol, and more preferably from 500 to 2000 g/mol.

The adhesive components may be dissolved in solvent or they may be solvent free adhesive systems. Preferred polyurethane adhesives are MOR-FREE 272 (a one-part PU adhesive) and MOR-FREE 698A and co-reactant MOR-FREE C-79 (100:50) (a two-part solventless PU adhesive and ADCOTE 536A/B (a two-component, solvent-based adhesive (all available from The Dow Chemical Company).

If desired, the polyurethanes can have incorporated in them, at any appropriate stage of preparation, additives such as pigments, fillers, lubricants, stabilizers, antioxidants, coloring agents, fire retardants, catalysts or adhesion promoters which are commonly used in conjunction with polyurethane elastomers.

### Multilayer Film

Figure 1 is a schematic of three-layer structure 10 which comprises film layer A (11) joined to substrate layer C (13) by adhesive layer B (12). Film layer A is made from a composition A comprising an ethylene-based polymer and a cure catalyst, e.g., a Lewis acid or base. Adhesive layer B comprises a PU adhesive that contains at least one isocyanate group. Substrate layer C comprises anything to which the PU adhesive will adhere, e.g., a plastic film, metal foil, paper, etc.

### Definitions

Unless stated to the contrary, implicit from the context, or customary in the art, all parts and percentages are by weight.

"Composition", "formulation" and like terms means a mixture or blend of two or more components. In the context of a mix or blend of materials from which a film layer is fabricated, the composition includes all the components of the mix, e.g., polymers additives, fillers, etc.

"Polymer" and like terms mean a compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined below.

"Interpolymer" and like terms mean a polymer prepared by the polymerization of at least two different types of monomers. The generic term interpolymer thus includes copolymers (employed to refer to polymers prepared from two different types of monomers), and polymers prepared from more than two different types of monomers.

"Ethylene-based polymer" and like terms mean a polymer that comprises, in polymerized form, a majority amount of ethylene monomer (based on the weight of the polymer), and optionally may comprise one or more comonomers.

"Ethylene/α-olefin interpolymer" and like terms mean an interpolymer that comprises, in polymerized form, a majority amount of ethylene monomer (based on the weight of the interpolymer), and at least one α-olefin.

"Ethylene/α-olefin copolymer" and like terms mean a copolymer that comprises, in polymerized form, a majority amount of ethylene monomer (based on the weight of the copolymer), and an α-olefin, as the only two monomer types.

"Isocyanate-containing compound" and like terms mean an organic compound or polymer containing at least one isocyanate group.

"Amine-containing compound" and like terms mean an organic compound or polymer containing at least one amine group.

"Hydroxy-containing compound" and like terms mean an organic compound or polymer containing at least one hydroxy group.

"Hydroxyl-functionalized ethylene-based polymer" and like terms mean a polymer formed from an ethylene-based polymer and one or more other compounds in which at least one compound contains at least one hydroxyl group.

"Comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

### Test Methods

### Density

Polymer density is measured in accordance with ASTM D-792.

### Melt Index

Melt index (I₂) of an ethylene-based polymer is measured in accordance with ASTM D-1238, condition 190°C/2.16 kg. Melt index (I₅) of an ethylene-based polymer is measured in accordance with ASTM D-1238, condition 190°C/5.0 kg. Melt index (I₁₀) of an ethylene-based polymer is measured in accordance with ASTM D-1238, condition 190°C/10.0 kg. High load melt index (I₂₁) of an ethylene-based polymer is measured in accordance with ASTM D-1238, condition 190°C/21.0 kg.

The following examples illustrate, but do not, either explicitly or implicitly, limit the present invention.

### EXPERIMENTAL

### I. Materials

The following resins and films were used in the examples.
Pre-laminated film made from a polyethylene terephthalate (PET, 12 micron (µm) thick) laminated to soft lamination grade AMCOR aluminum foil (9 µm thick) with ADCOTE 550/Coreactant F (The Dow Chemical Company). This laminated structure was obtained from AMPAC Company, Cary, IL.

DOWLEX 5056NG Polyethylene Resin is a linear low density PE with a density of 0.919 g/cc and an I₂ of 1.1 g/10min available from The Dow Chemical Company.

Polyurethane adhesive: (PU2A) MOR-FREE 698A (isocyanate terminated component) and (PU2B) MOR-FREE C79 (hydroxyl terminated component) each available from The Dow Chemical Company).

FASCAT 9102 catalyst is butyltin tris-2-ethylhexoate available from Arkema.

Zinc ricinoleate (660 grams/mole) is available from Akor Company.

ATMER 163 is a synthetic ethoxylated amine available from Croda Polymer Additives. See also M.V. Gonzalez-Rodriquez et al., Application of Liquid Chromatography in Polymer Non-ionic Antistatic Additive Analysis, J. Sep. Sci., 2010, 33, 3595-3603.

ATMER 100 is sorbitan laurate available from Croda Polymer Additives.

ATMER 1010 is a glycerol ester available from Croda Polymer Additives. See also U.S. Patent 5,663,002.

Zinc Octoate (zinc 2-ethylhexanoate) is a cure catalyst of Formula 6 available from Shepherd Chemical, Co.

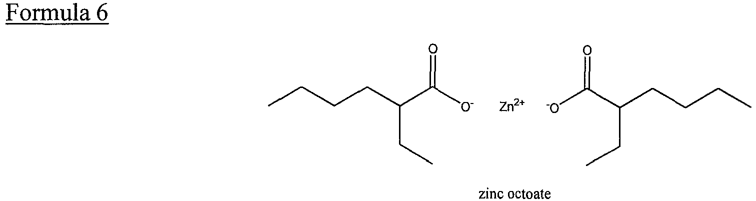

### II. Pre-Laminate (PE-Film) - Representative Procedure

Composition A for the PE film (single layer film) was made by dry blending DOWLEX 5056NG and an additive master batch (containing polyols or catalysts) under certain blend ratios.

The additive master batches were prepared by melt-blending on a twin-screw extruder at a speed of about 200 RPM with a melt temperature of about 220°C (430°F). The extruded strand was water-cooled and chopped into pellets. Five percent of catalyst or 5% polyol in DOWLEX 5056NG were made separately.

The PE films from composition A were fabricated by using a Colin cast film line. The films were cast at a melt temperature in the range of 200-220°C. The film thickness was 50 micrometers.

### III. Preparation of Laminate - Representative Procedure (Example 1)

Adhesives were diluted with ethyl acetate to about 40% solids. A wire wound rod was used to apply the adhesive to the foil side of a sheet (approximately 20 x 30 cm) of "PET/A1 pre-made laminate". A strip of paper about 5 cm wide and 20 cm long was laid across the center of the sheet to provide an unlaminated strip area to separate the films for the peel testing. The polyethylene films were corona treated and then laminated to the adhesive coated aluminum foil by pressing with a steel nip roll at about 82°C (180°F). Sheets of the laminates were placed between two steel plates and stored in a sealed vacuum oven containing anhydrous calcium sulfate desiccant and flushed with dry nitrogen. At intervals specified in the tables, 15 millimeter (mm) strips were cut and T-peel adhesion was tested on Thwing Albert tester at 10 cm (4 inches)/min.

**Table 1**

| Laminate Configuration for Example 1 | |
|---|---|
| Polyolefin (sealant) Layer (composition A) | DOWLEX 5056NG + Additives (Single layer film of 50 µm) |
| Polyurethane Adhesive Layer (composition B) | PU2A adhesive layer (MOR-FREE™ 698A coat wt of 2g/m² |
| "Pre-laminate" film | Aluminum foil (12 µm) |
| | ADCOTE 550/Coreactant F, (4.1 g/m²) |
| | PET (12 µm) |

The isocyanate terminated prepolymer portion of a two component solventless liquid adhesive, MOR-FREE 698A (PU2A) was tested as a single component (not mixed with a polyol co-reactant) to test the interaction of the film layer A with an adhesive (layer B) having a high initial content of isocyanate. The adhesive was diluted with ethyl acetate to about 40% solids. A wire wound rod was used to apply the adhesive to the aluminum foil side of a sheet (approximately 20 x 30 cm) of the pre-laminate film described in Table 1. A strip of paper about 5 cm wide and 20 cm long was laid across the center of the sheet to provide an unlaminated area to separate the films for the peel testing. The adhesive was applied at a coat weight of about 2.0 g/m². The polyethylene film (Composition A above) was corona treated then laminated to the adhesive coated aluminum foil by pressing with a steel nip roll at about 82°C (180°F). The sheets were placed between two steel plates and stored in a sealed vacuum oven containing anhydrous calcium sulfate desiccant and flushed with dry nitrogen. At intervals specified in the tables below, three 15 mm wide strips were cut and T-peel adhesion was tested using ASTM D1876 (ASTM International, West Conshohocken, PA, USA) with a Thwing Albert tester at a separation speed of 10 cm/min. The PET/Al pre-laminate was held in the upper (fixed) jaw and the experimental films held in the lower (moving) jaw. The test measures the force required to peel the polyolefin layer (Composition A) from the aluminum foil of the pre-laminate. The force increases as the liquid adhesive cures. When the adhesive is cured and develops sufficient cohesive strength, the polyolefin film does not peel or separate from the foil, but the force applied causes the polyolefin film to stretch or break. T-peel bond data in the following tables are the average of the three samples.

### IV. Bond Testing for Example 1

**Table 2**

| Mode of Failure (MOF) Abbreviations | | | |
|---|---|---|---|
| CF | Cohesive Failure | Adhesive on both substrates (PE and Al foil) | Recorded average force (Newtons) during peel |
| AF | Adhesive Failure | Adhesive on Al (not on PE) | Recorded average force (Newtons) during peel |
| FS | Film stretch | Adhesive holds both films together and PE stretches | Recorded the average maximum force for the three samples. |

**Table 3**

| T-peel Bond (N/15 mm) Development with Time | | | | | | | | | | | |
|---|---|---|---|---|---|---|---|---|---|---|---|
| Sample# | DOWLEX 5056NG % | Additive | Percent Additive | 2h N15 mm | 4h N15 mm | 6h N/15 mm | 24h N/15 mm | 48h N/15 mm | MOF* | 7d N/15 mm | MOF* |
| Control DOWLEX NG | 100 | | | 0.03 | 0.04 | 0.06 | 0.75 | 1.74 | CF | 6.23 | FS |
| 1* | 99.25 | Atmer™ 163 | 0.75 | 0.07 | 0.12 | 0.19 | 1.01 | 5.36 | FS | 3.48 | CF |
| 2 | 99.8 | Zinc Ricinoleate | 0.2 | 0.04 | 0.05 | 0.07 | 0.85 | 2.53 | CF | 7.66 | FS |
| 3 | 99.5 | Zinc Ricinoleate | 0.5 | 0.03 | 0.05 | 0.08 | 1.54 | 5.68 | FS | 7.74 | FS |
| Comp. Ex. A | 99.5 | Zinc Octoate | 0.5 | 0.01 | 0.01 | 0.11 | 0.08 | 0.07 | AF | 0.16 | AF |
| Comp. Ex. B | 99.25 | Atmer™ 1010 | 0.75 | 0.04 | 0.04 | 0.06 | 0.09 | 0.04 | AF | 0.10 | AF |

| | | | | | | | | | | | |
|---|---|---|---|---|---|---|---|---|---|---|---|
| *MOF = Mode of Failure The MOF for hours 2-24 was cohesive failure * This example is outside the scope of the present invention | | | | | | | | | | | |

Samples 2-3 (Table 3) are inventive examples. Comparative sample A is without a polyol. Comparative sample B is without a cure catalyst. The control sample is without a polyol or a cure catalyst. The results show that ATMER 163 accelerated the bond development compared with the control film (no additives). Within two days the adhesive held the laminate together so that the PE stretched (Sample 1). After a longer time (7d) the level of the polyol in the film (0.75%) caused the adhesive to soften so that the 7d bonds failed cohesively. The additive was effective in accelerating and completing the adhesive cure but a lower level is preferred to maintain longer term adhesion. Comparative Example B showed that a similar level of polyol alone (no tertiary amine catalyst) gave poor adhesion to the polyolefin layer. Samples 2 and 3 show that the hydroxyl functional zinc salt (zinc ricinoleate) was effective in accelerating bond development and the higher level (Sample 3) gave good bonds (PE stretch) within 2 days. The control film had low bonds and cohesive failure at this time. Comparative sample A (zinc octoate) shows that a zinc salt without hydroxyl functionality interfered with adhesion to the PE film (adhesive cures on the aluminum but fails to adhere to the PE).

### V. Two-Layer PE Film: - Example 2

A two layer polyethylene film was made where one layer contained catalyst or a mix of catalyst and ATMER 100, and the other layer did not have the additives. The purpose was to have the additives concentrated on the side of the film that comes in contact with the adhesive. This could make more an effective use of the additives.

The PE films in this example have two layer structure with the outer layer comprising 33.3 volume percent (vol%) of the sealant layer, while the inner layer is pure DOWLEX 2045G Polyethylene Resin. The outer layer was made by dry blending DOWLEX 2045G Polyethylene Resin and additive master batch (containing polyols or catalysts) under certain blend ratio. The additive master batches were prepared by using the same method as Example 1, except DOWLEX 2045G Polyethylene Resin was used instead of DOWLEX 5056NG Polyethylene Resin. The additives used were FASCAT 9102 (butyltin tris (2-ethylhexoate) and ATMER 100.

The two layer PE films were fabricated by using a Colin blown film line. The films were fabricated at temperature around 190°C-210 °C with a blow up ratio (BUR) of 2.5. The film thickness was 50 µm. The surface layer or exterior layer of the blown film tube is formed from the additive master batch, the internal layer of the blown film tube is made from neat DOWLEX Polyethylene Resin 2045G, and it represents a support layer.

### VI. XPS Data on Two-Layer Film

XPS analysis was conducted on a Kratos HSI XPS spectrometer. Insulating samples are referenced to C 1s at 285.0 eV. The spectral data was processed using a XPS program for Kratos.

**Table 4**

| XPS Test Results for Two-Layer Film | |
|---|---|
| Average Concentration's relative to C | |
| Sample | Sn 3d % |
| 800ppm FASCAT 9102 ext. | 0.069 |
| 800ppm FASCAT 9102 int. | 0 |
| 500ppm ATMER 100, 800ppm FASCAT 9102 ext. | 0.106 |
| 500ppm ATMER 100, 800ppm FASCAT 9102 int. | 0 |

XPS results (Table 4) showed a higher Sn concentration on the exterior surface of film containing combination of ATMER 100 and FASCAT 9102, indicating the synergistic effect of ATMER 100 and FASCAT 9102 on tin migration for the faster catalyzing the PU curing reaction.

### VII. Laminate Preparation for Example 2

The two components of a polyurethane adhesive, MOR-FREE 698A and co-reactant MOR-FREE C-79 were combined in the recommended mix ratio of 100/50 parts by weight. The adhesive mixture (at ambient temperature) was fed onto the roll coater of a Polytype pilot laminator (metered rolls set at 40°C to 50°C). The outer layer (with additives) of the polyolefin film (Composition A) was corona treated "in line" and the adhesive applied to this layer at a coverage of 1.6-2.2 grams/square meter (g/m²). This layer was mated to the second web (Al side of pre-laminate), nipped and wound on the finish roll of the pilot laminator. The laminate structure is shown in Table 5. The laminates were stored at ambient temperature and humidity. Samples were cut from the films at various times and the T-peel test was run as described in Example 1. The results are shown in Table 6.

**Table 5**

| Example 2 Laminate Configuration | |
|---|---|
| Polyolefin (sealant) Layer (multilayer films were used) (composition A) | DOWLEX 2045G 35 micron |
| | DOWLEX 2045G + Additives 15 micron |
| Polyurethane Adhesive Layer (composition B) | PU2A and PU2B adhesive layer (MOR-FREE 698A/C79 |
| | 2 g/m2 |
| "Pre-laminate" film (Example 1) | Aluminum foil |
| | ADCOTE 555/Coreactant F, (4.1 g/m²) |
| | PET |

### VIII. Adhesion Results for Example 2 (Same Test Method as Example 1)

Table 6 shows that the lower level of polyol does not dramatically reduce adhesion, as had been seen at higher polyol levels (Example 1). The tin catalyst was effective in accelerating bond development. Surprisingly, the combination of catalyst and polyol additive was the most effective.

**Table 6**

| Bond Strength for PE (DOWLEX 2045G) | | | | |
|---|---|---|---|---|
| | 3 hour | 4 hour | 6 hour | 24 Hour |
| Samples | N/15mm | N/15mm | N/15mm | N/15mm |
| Control PE film (C1) | 0.16 | 0.22 | 0.47 | 3.60 |
| *PE film with 800 ppm ATMER 100 | 0.16 | 0.23 | 0.62 | 2.23 |
| *PE film with 800ppm FASCAT 9102 | 0.16 | 0.28 | 0.55 | 4.33 |
| PE film with 500ppm ATMER 100 + 800ppm FASCAT 9102 | 0.21 | 0.31 | 0.86 | 5.60 |
| Cohesive failure for all samples | | | | |

| | | | | |
|---|---|---|---|---|
| * This example is outside the scope of the present invention | | | | |

### IX. Pouch Preparation and PAA Level Measurement for Example 2

The level of primary aromatic amines (PAAs), for example MDA (methylene diphenyl diamine) and TDA (toluene diamine/methylphenylene diamine), in a food simulant was analyzed by diazotization of the PAAs, so that the concentration of PAAs could be determined colorimetrically. The aromatic amines existing in the test solution were diazotized in a chloride solution, and subsequently coupled with N-(1-naphthyl)-ethylene diamine dihydrochloride, giving a violet solution. An enrichment of the color was done with a fixed phase extraction column. The amount of the PAAs is determined photometrically, at a wavelength of 550 nm. The concentration of PAAs was noted as "aniline hydrochloride equivalents," and reported as "micrograms of aniline hydrochloride per 100 ml (or 50 ml) of food-simulant per an area of 4 dm² of interior surface of pouch (sealant layer)."

Laminates were prepared as described above. Each pouch was formed by cutting a strip of about 28 cm x 16.3 cm from the middle section (width) of the laminate. Each strip was folded to form a 14 cm x 16.3 cm surface area, and the edge of the folded laminate was heat sealed about 1 cm along each open longitudinal edge of the folded strip was heat sealed, to form a pouch of 14 cm x 14.3 cm excluding the heat sealed edges. The film structure of a pouch wall, from interior layer to exterior layer, was as follows: Interior multi-layered film structure (PE-Film /PU Adhesive/Exterior pre-laminate (Al-Adhesive-PET)). The equipment used for heat sealing the edges was a Sencorp 12ASL/1. Sealing conditions for PE-based laminates were 0.28 MPa (2.8 bar) at 160°C.

Four pouches (two blanks and two test pouches), each with an inner surface area of about 14.0 cm x 14.3 cm were used for each inventive film in this study. Each pouch was formed after two days from the time of formation of the respective laminate. Two test pouches for each day and two blank pouches per day were prepared from each laminate. Prior to forming a pouch, the laminate was stored at room temperature under ambient atmosphere. Each pouch was filled with 100 ml of 3% aqueous acetic acid (i.e., the food simulant). These pouches were stored at 70°C in an air circulation oven for two hours. After cooling the test solution (contents of the pouch) to room temperature, 100 ml of test solution was mixed with 12.5 ml of hydrochloric acid solution (1N) and 2.5 ml of sodium nitrite solution (0.5 g per 100 ml of solution), and the contents were allowed to react for ten minutes. Ammonium sulfamate (5 ml; 2.5 g per 100 ml of aq. solution) was added and allowed to react for ten minutes. A coupling reagent (5 ml; 1 g of N-(1-naphtyl)-ethylenediamine dihydrochloride per 100 g of aq. solution) was added and allowed to react for 120 minutes. After each addition, the resulting mixture was stirred with a glass rod. For the "blank pouches 100 ml of the test solution was mixed with the derivation reagents as discussed above, except for the sodium nitrite. The solution was concentrated by elution through an ODS solid phase extraction column (ODS reverse phase, C18 end capped), and the extinction was measured at 550 nm, using an EVOLUTION 300 Spectrophotometer (from Thermo-Fisher Company). The column was conditioned using, first, 12 ml of methanol, then 12 ml elution solvent, and then 12 ml aqueous hydrochloric acid solution (0.1 N). Each derivative sample was added to the column using a glass beaker that was previously rinsed twice with 3 ml of aqueous hydrochloric acid solution (0.1 N). The column was subject to a vacuum (about 127 mm Hg) pull, to remove all rinse, for one minute. Then 5 ml of elution solvent was added to the column, and this step was repeated until 10 ml of eluent was collected. The extinction (absorption) of the eluent was measured in a 5 cm cuvette at 550 nm. To determine the concentration of PAA, the extinction of the reaction product was measured at 550 nm, in a 5 cm cuvette, against the reagent blank solution and a series of standards with known concentrations of aniline hydrochloride, which were processed in parallel.

Table 7 shows the results of the PAA test. Again, the results indicate that FASCAT 9102 was effective in reducing the amount of PAA detected at a given time. But, the combination of FASCAT 9102 and ATMER 100 was better than either of them alone.

**Table 7.**

| PAA Decay Data for PE (DOWLEX 2045G Two Layer Film | | |
|---|---|---|
| | PAA* | PAA* |
| Samples | 2 Day | 3 Day |
| Control PE film | 11.50 | 4.20 |
| *PE film with 800ppm ATMER 100 | 13.60 | 4.90 |
| *PE film with 800ppm FASCAT 9102 (sample 22-9) | 9.80 | 3.00 |
| PE film with 500ppm ATMER 100 + 800ppm FASCAT 9102 (sample 22-14) | 8.85 | 2.70 |
| *PAA reported as micrograms of aniline hydrochloride per 100 of food-simulant per an area of 4 dm² of interior surface of pouch (sealant layer)." | | |

| | | |
|---|---|---|
| * This example is not within the scope of the present invention | | |

## Claims

1. A multilayer film comprising at least two layers A and B:
A. a film layer A formed from a composition A comprising at least the following: an ethylene-based polymer and a cure catalyst comprising at least one hydroxy group and at least one organic metal salt; and
B. a film layer B formed from a composition B comprising at least one isocyanate; and wherein film layer A is in contact with film layer B;
wherein the ethylene-based polymer is a linear low density polyethylene.

2. The film of claim 1, in which the cure catalyst is a Lewis acid, a Lewis base or a combination thereof.

3. The film of any of the previous claims, in which the cure catalyst is one or more of Bi, Pb, Sn, Ti, Fe, Sb, U, Cd, Co, Th, Al, Hg, Zn, Ni, V, Ce, MgO, BaO, Na, K or Li in combination with a carboxylic acid.

4. The film of any of the previous claims, in which the cure catalyst is butylstannoic acid, or zinc ricinoleate.

5. The film of any of the previous claims, in which the amount of cure catalyst, in composition A, is from 10 ppm to 10,000 ppm, based on the weight of composition A.

6. The film of any of the previous claims, in which the ethylene-based polymer is an ethylene/α-olefin interpolymer or an ethylene/α-olefin copolymer.

7. The film of any of the previous claims, in which the isocyanate of composition B is at least one of an aromatic diisocyanate, aliphatic diisocyanate, cycloaliphatic diisocyanate or combinations thereof.

8. The film of any of the previous claims, in which film layer B is formed from a two component polyurethane (PU) adhesive.

9. The film of Claim 8, comprising a film layer C that is in contact with a film layer B.

10. The film of claim 9, wherein the film layer C is formed from composition C, wherein composition C comprises polyethylene terephthalate or a metal foil.

11. The film of any of the previous claims, wherein the ethylene-based polymer has a density from 0.90 g/cc to 0.93 g/cc as measured in accordance with ASTM D-792, and a melt index from 0.5 to 2 g/10 min as measured in accordance with ASTM D-1238 (190 °C/2.16 kg).

12. An article comprising the film of any of the previous claims.

## Patentansprüche

1. Eine Mehrschichtfolie, die mindestens zwei Schichten A und B beinhaltet:
A. eine Folienschicht A, gebildet aus einer Zusammensetzung A, die mindestens Folgendes beinhaltet: ein Polymer auf Ethylenbasis und einen Härtungskatalysator, der mindestens eine Hydroxylgruppe und mindestens ein organisches Metallsalz beinhaltet; und
B. eine Folienschicht B, gebildet aus einer Zusammensetzung B, die mindestens ein Isocyanat beinhaltet; und wobei Folienschicht A mit Folienschicht B in Kontakt ist;
wobei das Polymer auf Ethylenbasis ein lineares Polyethylen niedriger Dichte ist.

2. Folie gemäß Anspruch 1, wobei der Härtungskatalysator eine Lewis-Säure, eine LewisBase oder eine Kombination davon ist.

3. Folie gemäß einem der vorhergehenden Ansprüche, wobei der Härtungskatalysator eines oder mehrere von Bi, Pb, Sn, Ti, Fe, Sb, U, Cd, Co, Th, Al, Hg, Zn, Ni, V, Ce, MgO, BaO, Na, K oder Li in Kombination mit einer Carbonsäure ist.

4. Folie gemäß einem der vorhergehenden Ansprüche, wobei der Härtungskatalysator Butylstannonsäure oder Zinkricinoleat ist.

5. Folie gemäß einem der vorhergehenden Ansprüche, wobei die Menge des Härtungskatalysators in Zusammensetzung A bezogen auf das Gewicht der Zusammensetzung A 10 ppm bis 10 000 ppm beträgt.

6. Folie gemäß einem der vorhergehenden Ansprüche, wobei das Polymer auf Ethylenbasis ein Ethylen/α-Olefin-Mischpolymer oder ein Ethylen/α-Olefin-Copolymer ist.

7. Folie gemäß einem der vorhergehenden Ansprüche, wobei das Isocyanat von Zusammensetzung B mindestens eines von einem aromatischen Diisocyanat, aliphatischen Diisocyanat, cycloaliphatischen Diisocyanat oder Kombinationen davon ist.

8. Folie gemäß einem der vorhergehenden Ansprüche, wobei Folienschicht B aus einem Zwei-Komponenten-Polyurethan(PU)-Klebemittel gebildet ist.

9. Folie gemäß Anspruch 8, beinhaltend eine Folienschicht C, die mit einer Folienschicht B in Kontakt ist.

10. Folie gemäß Anspruch 9, wobei die Folienschicht C aus Zusammensetzung C gebildet ist, wobei Zusammensetzung C Polyethylenterephthalat oder eine Metallfolie beinhaltet.

11. Folie gemäß einem der vorhergehenden Ansprüche, wobei das Polymer auf Ethylenbasis eine Dichte von 0,90 g/cm³ bis 0,93 g/cm³, wie gemäß ASTM D-792 gemessen, und einen Schmelzindex von 0,5 bis 2 g/10 min, wie gemäß ASTM D-1238 (190 °C/2,16 kg) gemessen, aufweist.

12. Ein Artikel, beinhaltend die Folie gemäß einem der vorhergehenden Ansprüche.

## Revendications

1. Un film multicouche comprenant au moins deux couches A et B :
A. une couche A de film formée à partir d'une composition A comprenant au moins ce qui suit : un polymère à base d'éthylène et un catalyseur de durcissement comprenant au moins un groupe hydroxy et au moins un sel métallique organique ; et
B. une couche B de film formée à partir d'une composition B comprenant au moins un isocyanate ; et où la couche A de film est en contact avec la couche B de film ;
où le polymère à base d'éthylène est un polyéthylène base densité linéaire.

2. Le film de la revendication 1, dans lequel le catalyseur de durcissement est un acide de Lewis, une base de Lewis ou une combinaison de ceux-ci.

3. Le film de n'importe lesquelles des revendications précédentes, dans lequel le catalyseur de durcissement est un élément ou plus parmi Bi, Pb, Sn, Ti, Fe, Sb, U, Cd, Co, Th, Al, Hg, Zn, Ni, V, Ce, MgO, BaO, Na, K ou Li en combinaison avec un acide carboxylique.

4. Le film de n'importe lesquelles des revendications précédentes, dans lequel le catalyseur de durcissement est l'acide butylstannoique, ou le ricinoléate de zinc.

5. Le film de n'importe lesquelles des revendications précédentes, dans lequel la quantité de catalyseur de durcissement, dans la composition A, va de 10 ppm à 10 000 ppm, rapporté au poids de la composition A.

6. Le film de n'importe lesquelles des revendications précédentes, dans lequel le polymère à base d'éthylène est un interpolymère d'éthylène/α-oléfine ou un copolymère d'éthylène/α-oléfine.

7. Le film de n'importe lesquelles des revendications précédentes, dans lequel l'isocyanate de la composition B est au moins un élément parmi un diisocyanate aromatique, un diisocyanate aliphatique, un diisocyanate cycloaliphatique ou des combinaisons de ceux-ci.

8. Le film de n'importe lesquelles des revendications précédentes, dans lequel la couche B de film est formée à partir d'un adhésif polyuréthane (PU) à deux composants.

9. Le film de la revendication 8, comprenant une couche C de film qui est en contact avec une couche B de film.

10. Le film de la revendication 9, où la couche C de film est formée à partir d'une composition C, où la composition C comprend un poly(téréphtalate d'éthylène) ou une feuille métallique.

11. Le film de n'importe lesquelles des revendications précédentes, où le polymère à base d'éthylène présente une masse volumique allant de 0,90 g/cm³ à 0,93 g/cm³ telle que mesurée conformément à l'ASTM D-792, et un indice de fluidité à l'état fondu allant de 0,5 à 2 g/10 min tel que mesuré conformément à l'ASTM D-1238 (190 °C/2,16 kg).

12. Un article comprenant le film de n'importe lesquelles des revendications précédentes.
